Europäisches Patentamt

European Patent Office

Office européen des brevets

(11) Publication number: 0 384 816
A2

# EUROPEAN PATENT APPLICATION

(21) Application number: 90400435.5

(51) Int. Cl.⁵ **A23L 2/38, A23C 19/09**

(22) Date of filing: 16.02.90

(30) Priority: 21.02.89 JP 41114/89

(43) Date of publication of application:
29.08.90 Bulletin 90/35

(84) Designated Contracting States:
AT BE CH DE DK ES FR GB GR IT LI LU NL SE

(71) Applicant: COMPAGNIE GERVAIS-DANONE
126-130 rue Jules Guesde
F-92302 Levallois Perret(FR)

(72) Inventor: Ishikawa, Yoichi
2-1 Suzukicho, Kawasaki-ku
Kawasaki, Kanagawa(JP)
Inventor: Amamgi, Takashi
2-1 Suzukicho, Kawasaki-ku
Kawasaki, Kanagawa(JP)

(74) Representative: Orès, Bernard et al
Cabinet ORES 6, Avenue de Messine
F-75008 Paris(FR)

(54) Cheese containing beverage.

(57) A cheese containing beverage is disclosed, characterized in that it comprises a liquid cheese and a stabilizer, the beverage being further characterized in that it has a pH in the range of 3.8 to 4.8.

EP 0 384 816 A2

## CHEESE CONTAINING BEVERAGE

The invention relates to a beverage containing cheese.

Cheese is nutritious and has been consumed for a long time in the past. But, a beverage containing cheese has not been marketed for the present. The reason why no such product has been marketed up to now is probably due to the difficulty of keeping stable a dispersion of cheese curd in water, especially as heat sterilization brings immediate separation and sedimentation of the dispersion contituents.

To improve this point, some methods have been suggested, for example, to add cream cheese to whey and to mix and dilute the same (JP-A-60 133 161), or to combine cheese with crystalized cellulose and to disperse, then stabilize and redisperse the ingredients in order to obtain a stable beverage containing cheese (JP-A-61-124362), etc. But these methods result in products having close to neutral pH, and the product, therefore, looses its cheese flavour and inevitably induces a risky bacteriological situation or needs a complicated process to redisperse the constituents after filling the product in its package, etc.

The invention aims to provide a beverage containing cheese which is easy to obtain while keeping good physical properties, stability in preservation and cheese flavour, as well as preventing physical deterioration due to sterilization process as above described in cheese beverage processes.

According to the invention, in order to obtain a beverage containing cheese with no physical deterioration due to heat sterilization while keeping a good quality upon sterilization, the pH of the product is choosen within a specific range resulting from attentive study performedto solve the above mentioned problems.

According to the invention, there is provided a beverage containing cheese, characterized in that it comprises a stabilizer, besides cheese and a liquid and further characterized in that it has a pH in the range of 3.8 to 4.8.

In one embodiment, the liquid is water.

In other embodiments, the liquid is water to which has been added milk, skimmed milk, concentrated milk or powder milk, skimmed powder milk, and/or liquid dairy products such as acidified milk and fermented milk.

In a modification fruit juice is added to the water.

In a preferred embodiment the stabilizer is pectin.

The viscosity of the beverage if of about 10 to 30 cp at 10C.

The cheese of the cheese containing beverage is advantageously quark cheese or non heated soft cheese.

The content of cheese, preferably natural cheese, depends on the kind of cheese used and the density of milk dry matter. It is desirable that the density of milk dry matter derived from natural cheese found in the beverage containing cheese be in the range of 1-15 % of product weight from a point of view of beverage fluidity (viscosity). More concretely, in the case of Quark cheese such as the one known as "Fresh Cheese" of AJINOMOTO-DANONE, because the product has a high water content, such quark comprises 5-50 % of total weight in order to obtain a desirable beverage of natural cheese.

The liquid used together with cheese can be, besides natural water, milk, skimmed milk, concentrated milk or powder milk, skimmed powder milk, etc added with water or liquid dairy products such as acidified milk, fermented milk and also fruit juice : all those items are acceptable to give water fluidity.

The pH of the beverage containing cheese according to the invention ranges between 3.8 - 4.8 in general. From the point of view of stability of the finished product, however, in case the product contains only protein derived from natural cheese it is desirable that the pH ranges between 4.0 - 4.8 and in case it contains also other protein, the preferred pH range should be between 3.8 -4.6. It is in the latter case that fluidity of liquid dairy product such as milk is attained. If pH is out of the above range, either lower or higher than above described figures, sedimentation of milk dry matter occurs in a heating process and during conservation ; moreover the organoleptic characteristics deteriorate considerably.

The arrangement of pH is made by addition of citric acid, malic acid, tartric acid and other organic acids, or by combination of acidified milk, lactobacilli fermented beverage, fruit juice, etc. It is also possible to combine natural cheese of lower pH.

A beverage containing cheese according to the invention also contains a stabilizer.

As regards stabilizers, pectin, CMC, various natural gums, carrageenam, fine crystal cellulose can be used but the use of pectin is preferable. This is due to the physical characteristics (viscosity) of the finished product. The consistency of pectin in total beverage containing cheese is preferably between 0.2 - 1.0 % in weight.

To a beverage containing cheese according to the invention can be added, besides stabilizer, a sweetener, flavour(s), etc when necessary, and a beverage containing cheese plus such a sweetener and flavour(s) is within the range of the invention.

The viscosity of the beverage containing cheese is such as to be liquid as a beverage, that is, lower than 50 cp at 10° C, preferably around 10 - 30 cp.

To manufacture a beverage containing cheese according to the invention raw materials are mixed by the usual manufacturing methods, then acids are added, then takes place a heating and a sterilization step. Sterilization conditions have no specific restriction, for example, sterilization conditions may be from 60 minutes to 5 sec, at 60 - 120° C.

The invention is explained hereinafter through examples. In the explanation % and part indicate weight % and weight part, respectively.

Example 1

The ingredients shown in Table 1 are mixed and homogenized, then arranged to have the pH indicated in Table 2. pH is arranged by adding a proper quantity of citric acid during mixing and homogenization.

TABLE 1

| Fresh cheese | 20 % |
|---|---|
| Milk | 60 % |
| Pectin | 0.6 % |
| Sugar | 9.0 % |
| Water | 10.4 % |
| Total | 100.0 % |

The above indicated homogenized compound is sterilized for 5 min. at 90° C and regarded as finished product of beverage containing cheese to be evaluated as regards its stability. The result is shown in Table 2.

TABLE 2

| pH | Stability |
|---|---|
| 4.6 | Δ |
| 4.4 | o |
| 4.2 | o |
| 4.0 | o |
| 3.8 | o |
| 3.6 | x |

In the above table,
o means no sedimentation after 2 weeks of conservation
Δ means a certain sedimentation made under the same conditions
X means sedimentation of milk dry matter made just after heating.

Example 2.

The ingredients shown in Table 3 are mixed and homogenized, and arranged to have the pH indicated in Table 4. pH is arranged by adding a proper quantity of citric acid during mixing homogenization.

3

TABLE 3

| | |
|---|---|
| Fresh cheese | 40.0 % |
| Pectin | 0.6 % |
| Sugar | 9.0 % |
| Water | 50.4 % |
| | 100.0 % |

The above indicated homogenized compound is sterilized for 1 min. at 95°C and regarded as finished product of beverage containing cheese to be evaluated as regards its stability. The result is shown in Table 4.

TABLE 4

| pH | Stability |
|---|---|
| 4.8 | Δ |
| 4.6 | o |
| 4.4 | o |
| 4.2 | o |
| 4.0 | o |
| 3.8 | × |

The signification of the signs of above Table is the same as that of Table 2.

Example 3.

50 parts of "Fresh Cheese" are dispersed in 40.3 parts of water, then 9 parts of sugar are added, 0.6 part of pectin and 0.1 part of citric acid. After homogenization, it is treated by high pressure homogenizer. The obtained pH is 4.25.

It is sterilized for 30 seconds at 95°C, then cooled and a stable low viscosity (25 cp) beverage containing cheese is produced. The composition of the obtained product is shown in Table 5.

TABLE 5

| | |
|---|---|
| Fresh cheese | 50 % |
| Sugar | 9 % |
| Pectin | 0.6 % |
| Water | 40.3 % |
| Citric acid | 0.1 % |
| Total | 100.0 % |

A beverage containing cheese produced as above has desirable acidity and flavour and does not show any sedimentation of milk dry matter after 2 weeks of conservation at 10°C ; it also shows stable physical properties. No bacteriological problem is observed.

Example 4.

30 Parts of milk and 20 parts of Fresh Cheese are combined and dispersed, the mix is added with 6.0 parts of strawberry juice, 0.1 part of flavour, then 9 parts of sugar, 0.6 part of pectin, 0.4 part of citric acid and 33.8 parts of water are also added. All products are homogenized and treated by high pressure homogenizer. The obtained pH is 4.25.

The product is sterilized for 10 seconds at 100°C, then cooled and there is obtained a stable low viscosity (20 cp) beverage containing cheese.

The composition of the product is shown in Table 6.

TABLE 6

| Fresh cheese | 20 % |
|---|---|
| Milk | 30 % |
| Sugar | 9 % |
| Pectin | 0.6 % |
| Strawberry juice | 6.0 % |
| Coloring | 0.1 % (beet red pigment) |
| Flavour | 0.1 % (strawberry flavour) |
| Citric acid | 0.4 % |
| Water | 33.8 % |
| Total | 100.0 % (pH = 4.25) |

A beverage containing cheese produced as above has a desirable flavour of strawberry juice and cheese and acidity and does not show any sedimentation of milk dry matter after 2 weeks of conservation at 10°C; it also shows stable physical properties and, no bacteriological problem is observed.

Claims

1. A cheese containing beverage, characterized in that it comprises a stabilizer besides cheese and a liquid and further characterized in that it has a pH in the range of 3.8 to 4.8.

2. A cheese containing beverage according to claim 1, characterized in that the liquid is water.

3. A cheese containing beverage according to claim 2, characterized in that the liquid is water to which has been added milk, skimmed milk, concentrated milk or powder milk, skimmed powder milk and/or liquid dairy products such as acidified milk and fermented milk.

4. A cheese containing beverage according to claim 2, characterized in that the liquid is water to which has been added fruit juice.

5. A cheese containing beverage according to any one of the preceeding claims, characterized in that the stabilizer is pectin.

6. A cheese containing beverage according to claim 5, characterized in that pectin amounts to about 0.2 - 1 % by weight of the product.

7. A cheese containing beverage according to any one of the preceeding claims, characterized in that it has a viscosity of about 10 to 30 cp at 10°C.

8. A cheese containing beverage according to any one of the preceeding claims, characterized in that the cheese is quark cheese or non heated soft cheese.

9. A cheese containing beverage according to any one of the preceeding claims, characterized in that the milk derived dry matter contents is in the range of 1 - 15 % by weight.